# EUROPÄISCHE PATENTSCHRIFT

(11) **EP 3 631 378 B1**
(45) Veröffentlichungstag und Bekanntmachung des Hinweises auf die Patenterteilung: **12.04.2023**
(21) Anmeldenummer: 18723489.3
(22) Anmeldetag: 08.05.2018
(51) Int. Cl.: G01F 1/84, G01F 25/10

(54) **MESSAUFNEHMER ZUM MESSEN DES MASSENDURCHFLUSSES EINES STRÖMUNGSFÄHIGEN MEDIUMS**
SENSOR FOR MEASURING THE MASS FLOW OF A FLOWABLE MEDIUM
CAPTEUR DE MESURE POUR MESURER LE DÉBIT MASSIQUE D'UN MILIEU FLUIDE

(30) Priorität: 02.06.2017 DE 102017112245
(43) Veröffentlichungstag der Anmeldung: 08.04.2020
(73) Patentinhaber: Endress+Hauser Flowtec AG, 4153 Reinach (CH)
(72) Erfinder: HUBER, Christof, 3007 Bern (CH); SCHÜTZE, Christian, 4055 Basel (CH); MUNDSCHIN, Dieter, 4410 Liestal (CH); SCHWENTER, Benjamin, 4226 Breitenbach (CH); RAMSEYER, Severin, 4142 M nchenstein (CH); WERNER, Marc, 79639 Grenzach-Wyhlen (DE)
(74) Vertreter: Hahn, Christian
(86) Internationale Anmeldenummer: PCT/EP2018/061852
(87) Internationale Veröffentlichungsnummer: WO 2018/219601

(56) Entgegenhaltungen:
- EP-A1- 0 518 124
- EP-A1- 2 199 756
- WO-A1-2015/076676

## Beschreibung

Die vorliegende Erfindung betrifft einen Messaufnehmer zum Messen eines Massedurchflusses mit einer einzigen schwingfähigen Messrohrleitung, wobei die Messrohrleitung in ihrer Ruhelage in einer Rohrleitungsebene gebogen ist, wobei die Messrohrleitung eine zweizählige Rotationssymmetrie aufweist bezüglich einer Achse, die senkrecht zur Rohrleitungsebene verläuft. Gattungsgemäße Messaufnehmer sind beispielsweise beschrieben in der Offenlegungsschrift DE 039 16 285 A1, der Veröffentlichung EP 0 518 124 A1 sowie der noch unveröffentlichten Patentanmeldung DE 10 2015 122 146.2. Messaufnehmer mit einem einzigen Messrohr sind insofern vorteilhaft, als sie keine Strömungsteiler enthalten. Anders als bei Messaufnehmern mit zwei Messrohren, die symmetrisch gegeneinander schwingen, ist es jedoch bei Messaufnehmern mit nur einem einzigen Messrohr schwieriger eine Wechselwirkung mit der Umgebung durch Auskoppeln von Schwingungsenergie einer Biegeschwingungsnutzmode bzw. durch Einkoppeln von störenden Schwingungen aus der Umgebung zu vermeiden. Die Offenlegungsschrift DE 10 2010 030 340 A1 offenbart hierzu einen Messaufnehmer mit einem einzigen Messrohr, bei dem das Messrohr zwei parallel geführte Schleifen aufweist, die gegeneinander schwingen und sich insoweit gegenseitig balancieren. Für diesen Messaufnehmertyp ist jedoch aufgrund des Verlaufs der Messrohrleitung in Schleifen eine Entleerbarkeit des Messrohrs prinzipiell ausgeschlossen, während gattungsgemäße Messaufnehmer grundsätzlich entleerbar gestaltet sein können.

Als einen Beitrag, um eine Wechselwirkung mit der Umgebung durch Auskoppeln von Schwingungsenergie einer Biegeschwingungsnutzmode bzw. durch Einkoppeln von störenden Schwingungen aus der Umgebung zu vermeiden, beschreibt EP 0 518 124 A1 eine Frequenztrennung zwischen den Schwingungen der Messrohrleitung und Schwingungen anderer Komponenten des Messaufnehmers.

Es ist die Aufgabe der vorliegenden Erfindung, einen möglichst kompakten und dabei störunempfindlichen Messaufnehmer bereitzustellen. Die Aufgabe wird erfindungsgemäß gelöst durch den Messaufnehmer gemäß dem unabhängigen Patentanspruch 1.

Der erfindungsgemäße Messaufnehmer zum Messen des Massendurchflusses eines strömungsfähigen Mediums umfasst:
einen Leitungseinlaufabschnitt;
eine einzige schwingfähige Messrohrleitung zu Führen des Mediums, wobei die Messrohrleitung in ihrer Ruhelage in einer Rohrleitungsebene gebogen ist;
einen Leitungsauslaufabschnitt;
mindestens einen Schwingungserreger zum Anregen von Biegeschwingungen der Messrohrleitung in einer Biegeschwingungsnutzmode;
mindestens zwei Schwingungssensoren zum Erfassen von Schwingungen der Messrohrleitung;
ein Tragsystem mit einer Trägerplatte, mindestens einem einlaufseitigen Lagerkörper und mindestens einem auslaufseitigen Lagerkörper; und
ein Messaufnehmergehäuse;
wobei das Tragsystem Tragsystemschwingungsmoden aufweist, die elastische Verformungen der Trägerplatte umfassen;
wobei die Messrohrleitung mittels des einlaufseitigen Lagerkörpers und mittels des auslaufseitigen Lagerkörpers mit der Trägerplatte verbunden und durch die Lagerkörper begrenzt ist,
wobei die Messrohrleitung einlaufseitig an den Leitungseinlaufabschnitt und auslaufseitig an den Leitungsauslaufabschnitt anschließt und über letztere an eine Rohrleitung anschließbar ist, wobei der Leitungseinlaufabschnitt und der Leitungsauslaufabschnitt jeweils fest mit dem Messaufnehmergehäuse verbunden sind
wobei die Trägerplatte eine Anzahl von insbesondere spiralförmigen Federlagern aufweist, wobei ein Federlager jeweils durch mindestens einen Schnitt in der Trägerplatte freigelegt ist,
wobei die Trägerplatte über das oder die Federlager gegenüber dem Messaufnehmergehäuse federnd gelagert ist, so dass sie drei Translationsschwingungsfreiheitsgrade und drei Rotationsschwingungsfreiheitsgrade aufweist,
wobei die Eigenfrequenzen von Schwingungen der Trägerplatte gegenüber dem Messgerätgehäuse aufgrund der Translationsschwingungsfreiheitsgrade und der Rotationsschwingungsfreiheitsgrade geringer sind als eine Nutzmodeeigenfrequenz der Biegeschwingungsnutzmode,
wobei die Nutzmodeeigenfrequenz geringer ist als die Eigenfrequenzen von den Tragsystemschwingungsmoden,
wobei die Messrohrleitung eine zweizählige Rotationssymmetrie aufweist bezüglich einer Achse, die senkrecht zur Rohrleitungsebene verläuft,
wobei die Lagerkörper so positioniert sind, dass die Nutzmodeeigenfrequenz einen Frequenzabstand zur nächsten Eigenfrequenz einer anderen Schwingungsmode der Messrohrleitung aufweist, der einen Frequenzabstandsgrenzwert nicht unterschreitet,
wobei der Frequenzabstandsgrenzwert mindestens 4% der Nutzmodeeigenfrequenz beträgt.

Beim erfindungsgemäßen Messaufnehmer wird also neben der Frequenztrennung zwischen den Schwingungsmoden der Messrohrleitung einerseits und den Tragsystemschwingungsmoden bzw. Schwingungen der Trägerplatte gegenüber dem Messaufnehmergehäuse andererseits, durch Anordnung die Positionierung der Lagerkörper erreicht, dass störende Schwingnungsmoden der Messrohrleitung sich allenfalls vernachlässigbar auf die Biegeschwingungsnutzmode auswirken.

Wenngleich die Biegeschwingungsnutzmode bevorzugt eine Schwingungsmode ist bei der die Messrohrleitung senkrecht zur Rohrleitungsebene schwingt, sind bei der Ermittlung der Frequenzabstände auch sämtliche Schwingungsmoden der Messrohrleitung beachtlich, also neben solchen mit Schwingungen senkrecht zur Rohrleitungsebene, auch solche mit Schwingungen in der Rohrleitungsebene.

Geeignete Positionen der Lagerkörper können beispielsweise durch positionsabhängige Ermittlung der Eigenfrequenzen von Schwingungsmoden der Messrohrleiotung mittels FEM-Simulation bestimmt werden.

Die insbesondere spiralförmigen Federlager entkoppeln mit geringem Aufwand sämtliche Schwingungsmoden zwischen Messaufnehmergehäuse und Trägerplatte im Frequenzbereich der Biegeschwingungsnutzmode und zwar unabhängig von der Schwingungsrichtung. Hierin ist ein erhebliche Vorteil gegenüber Kragträgerfedern gegeben, wie sie in WO 2015/076 676 A1 offenbart sind. Derartige Kragträgerfedern erlauben nämlich nur Auslenkungen senkrecht zur Ebene der Trägerplatte. Schwingungen in der Plattenebene können daher durch solche Kragträger nicht entkoppelt werden.

Erfindungsgemäß beschreibt ein Kalibrierfaktor (Calf) in erster Näherung eine Proportionalität zwischen einem Massedurchfluss durch die Messrohrleitung und einer Phasendifferenz zwischen Schwingungen der in der Biegeschwingungsnutzmode schwingenden Messrohrleitung am Ort der beiden Schwingungssensoren, wobei eine Bewertungsfunktion, die proportional zum Frequenzabstand und umgekehrt proportional zur Nutzmodeeigenfrequenz und zum Kalibrierfaktors Calf ist, ein lokales oder insbesondere absolutes Maximum aufweist, wobei die Lagerkörper so positioniert sind, das die Bewertungsfunktion den Wert des Maximums um nicht mehr als 8%, insbesondere nicht mehr als 4% und bevorzugt nicht mehr als 2% unterschreitet. Der von der Lagerkörperposition abhängige Kalibrierfaktor Calf kann beispielsweise FEM-Simulation ermittelt werden.

Diese Bewertungsfunktion ermöglicht eine balancierte Berücksichtigung von Robustheit gegen störende Schwingungen einerseits und großer Messempfindlichkeit andererseits beim Entwurf des Messaufnehmers. Dies ist gerade im Hinblick auf einen kompakten Sensorentwurf beachtlich zu dem weiter unten noch weitere Gesichtspunkte genannt sind.

In einer Weiterbildung der Erfindung ist die Biegeschwingungsnutzmode, eine F3-Biegeschwingungsmode, in welcher die Messrohrleitung senkrecht zur Rohrleitungsebene schwingt. Bei dieser Schwingungsmode ist das Integral der Beschleunigung entlang der Messrohrleitung minimal. Insofern als die F3-Biegeschwingungsmode auch die zweizähligen Symmetrie der Messrohrleitung aufweist, verbleiben in Summe auch keine Drehmomente an den Lagerkörpern. Im Ergebnis können daher allenfalls vernachlässigbare Anteile der Vibrationsenergie über die Lagerblöcke dissipiert werden. Entsprechend ist die F3-Biegeschwingungsmode auch kaum über externe Vibrationen zu stören.

In einer Weiterbildung der Erfindung betragen die Eigenfrequenzen von Schwingungen der Trägerplatte gegenüber dem Messgerätgehäuse aufgrund der Translationsschwingungsfreiheitsgrade und der Rotationsschwingungsfreiheitsgrade höchstens die Hälfte der Nutzmodeeigenfrequenz des Biegeschwingungsnutzmodes, wobei die Tragsystem-Eigenfrequenz mindestens das Doppelte die Nutzmodeeigenfrequenz beträgt.

In einer Weiterbildung der Erfindung ist die Anzahl der Federlager 1, 2, 3, oder 4. Die Ausgestaltung mit vier Federlagern ist derzeit bevorzugt, da auf diese Weise eine der zweizähligen Rotationssymmetrie der Messrohrleitung entsprechende Lagerung der Trägerplatte einfach zu realisieren ist, indem die Federn entsprechend angeordnet werden. Grundsätzlich ist die auch mit nur zwei Federn möglich, jedoch wirken sich in diesem Fall Fertigungstoleranzen beim Freilegen der Federn in der Trägerplatte stärker aus.

In einer Weiterbildung der Erfindung weist die Messrohrleitung einen S-förmigen Verlauf auf, wobei in der Rohrleitungsebene eine Längsrichtung (z) existiert, zu welcher die Rohrleitungsachse an keinem Punkt einen Winkel von mehr als 85°, insbesondere nicht mehr als 83° aufweist. Insbesondere mit einer vertikalen Orientierung der Längsrichtung ist damit die Entleerbarkeit der Messrohrleitung gewährleistet.

In einer Weiterbildung der Erfindung weist die Messrohrleitung zwischen den beiden Lagerkörpern zwei äußere gerade Abschnitte und einen zentralen geraden Abschnitt auf, die durch zwei (kreis-)bogenförmige Abschnitte verbunden sind, wobei die beiden Lagerkörper jeweils an den äußeren geraden Abschnitten angeordnet sind.

Durch den zentralen geraden Abschnitt verläuft die Achse der zweizähligen Rotationssymmetrie. An die äußeren geraden Abschnitte schließen der Leitungseinlaufabschnitt bzw. der Leitungsauslaufabschnitt an.

Durch die Anordnung der Lagerkörper an den äußeren geraden Abschnitten wird in Abweichung zu den Messaufnehmern nach dem Stand der Technik ein in Längsrichtung besonders kompakter Aufbau realisiert. Insofern als dies tendenziell zu einer erhöhten Steifigkeit der Messrohrleitung bezüglich des dem Biegeschwingungsnutzmode überlagerten Coriolis-Mode führt, bewirkt dies zunächst einen höheren Kalibrierfaktor (Calf). Hier kommt jedoch die weiter oben genannte Bewertungsfunktion zum Tragen, mit welcher diese nachteilige Konsequenz der kompakten Bauweise zumindest teilweise ausgeglichen werden kann.

In einer Weiterbildung der Erfindung verläuft jeweils eine Winkelhalbierende zwischen Rohrmittelachsen des zentralen geraden Abschnitt und eines der äußeren geraden Abschnitte, wobei die Schwingungssensoren jeweils zwischen einem Schnittpunkt einer der Winkelhalbierenden mit der Messohrleitung und einem Punkt auf dem äußeren geraden Abschnitt der Messrohrleitung, der einen Krümmungsradius des kreisbogenförmigen Abschnitts vom Übergang des kreisbogenförmigen Abschnitts zum äußeren geraden Abschnitt entfernt ist, an der Messrohrleitung montiert sind.

In einer Weiterbildung der Erfindung tragen der Leitungseinlaufabschnitt und der Leitungsauslaufabschnitt, bezüglich der Translationsschwingungsfreiheitsgrade und der Rotationsschwingungsfreiheitsgrade der Trägerplatte gegenüber dem Messaufnehmergehäuse ergänzend zu der Feder bzw. Federn zu einer jeweils freiheitsgradspezifischen Richtgröße bei, wobei ein Beitrag des Leitungseinlaufabschnitts von einem entsprechenden Beitrag des Leitungsauslaufabschnitts jeweils nicht mehr als 10%, und insbesondere nicht mehr 5% des jeweils kleineren Beitrags abweicht.

In einer Weiterbildung der Erfindung beträgt der gemeinsame Beitrag des Leitungseinlaufabschnitts und des Leitungsauslaufabschnitts zu keiner der freiheitsgradspezifischen Richtgrößen mehr als 40%, insbesondere nicht mehr als 20% und bevorzugt nicht mehr als 10%.

In einer Weiterbildung der Erfindung weisen der Leitungseinlaufabschnitt und der Leitungsauslaufabschnitt im Wesentlichen den gleichen Rohrquerschnitt auf wie die Mess, insbesondere das gleiche Rohrmaterial wie die Messrohrleitung und sind bevorzugt einstückig mit der Messrohrleitung gefertigt.

In einer Weiterbildung der Erfindung betragen die Eigenfrequenzen der Translationsschwingungsfreiheitsgrade und Rotationsschwingungsfreiheitsgrade der Trägerplatte nicht weniger als 70 Hz, insbesondere nicht weniger als 100 Hz, und/oder nicht mehr als 400 Hz. Hierdurch wird gewährleistet, dass typische störende Vibrationen von technischen Anlagen, die Trägerplatte nicht zum Schwingen anregen können.

In einer Weiterbildung der Erfindung verläuft jeweils eine Winkelhalbierende (w1, w2) zwischen einer Rohrmittelachse des zentralen geraden Abschnitts und einer Rohrmittelachse eines der äußeren geraden Abschnitte, wobei ein Koordinatensystem mit einer z-Achse in der Rohrleitungsebene gegeben ist, die senkrecht zu den Winkelhalbierenden (w1, w2) verläuft, wobei die Achse der zweizähligen Rotationssymmetrie die x-Achse bildet, wobei eine durch die x-Achse und die z-Achse aufgespannte y-z-Ebene, die äußeren geraden Abschnitte beabstandet zu den Lagerkörpern schneidet.

In einer Weiterbildung der Erfindung ist der Schwingungserreger im Zentrum der zweizähligen Rotationssymmetrie angeordnet, und wobei der Schwingungserreger dazu eingerichtet ist Biegeschwingungen senkrecht zur Rohrleitungsebene anzuregen.

In einer Weiterbildung der Erfindung verläuft jeweils eine Winkelhalbierende zwischen einer Rohrmittelachse des zentralen geraden Abschnitts und einer Rohrmittelachse eines der äußeren geraden Abschnitte, wobei ein Koordinatensystem mit einer z-Achse in der Rohrleitungsebene gegeben ist, die senkrecht zu den Winkelhalbierenden verläuft, wobei Achse der zweizähligen Rotationssymmetrie die x-Achse bildet, wobei die y-Achse die parallel zu den Winkelhalbierenden durch den Schnittpunkt von x-Achse und z-Achse verläuft, wobei eine charakteristische Basisfläche der Messrohrleitung durch ein Rechteck definiert ist, dessen Seiten einerseits in z-Richtung durch jeweils einen Schnittpunkt einer der Winkelhalbierenden mit der Rohrachse eines gebogenen Abschnitts und andererseits in y-Richtung durch jeweils einen Schnittpunkt eines der Lagerkörper mit der Rohrachse der Messrohrleitung verlaufen, wobei das Verhältnis der Rechteckfläche zum Innendurchmesser der Messrohrleitung nicht mehr als 8000, insbesondere nicht mehr als 6000, und bevorzugt nicht mehr als 5000 beträgt.

In einer Weiterbildung der Erfindung beträgt der Innendurchmesser der Messrohrleitung nicht mehr als 5 mm.

Die Erfindung wird nun anhand der in den Zeichnungen dargestellten Ausführungsbeispiele erläutert. Es zeigt:
Fig. 1: Eine Aufsicht auf ein erstes Ausführungsbeispiel eines erfindungsgemäßen Messaufnehmers;
Fig. 2: Ein Diagramm zu Aspekten einer Bewertungsfunktion;
Fig 3: Eine Detailansicht eines Federlagers eines erfindungsgemäßen Messaufnehmers; und
Fig. 4: Eine Detailansicht eines Ein- bzw. Auslaufabschnitts eines Ausführungsbeispiels eines erfindungsgemäßen Messaufnehmers.

Der Messaufnehmer 100 umfasst eine Messrohrleitung 10 mit einem ersten geraden äußeren Abschnitt 11 einem zweiten geraden äußeren Abschnitt 12 und einen zentralen geraden Abschnitt 13 sowie einen ersten gebogenen Abschnitt 15 und einen zweiten gebogenen Abschnitt 16. Die beiden geraden äußeren Abschnitte 15, 16 sind jeweils mittels eines der gebogenen Abschnitte 15, 16 mit dem zentralen geraden Abschnitt 13 verbunden. Die Messrohrleitung 10 ist durch zwei Lagerkörper 21, 22 begrenzt, und mit letzteren an einer biegesteifen Trägeplatte 30 befestigt. Die Messrohrleitung 10 verläuft im Wesentlichen in einer zur Trägerplatte 30 parallelen Rohrleitungsebene. Die Messrohrleitung weist eine zweizählige Rotationssymmetrie um eine Symmetrieachse auf, die senkrecht zur Rohrleitungsebene durch einen Punkt C2 in der Mitte des zentralen Rohrleitungsabschnitts verläuft. Die Messrohrleitung hat einen Innendurchmesser von beispielsweise 5 mm oder weniger. Es ist aus einem Metall, insbesondere Edelstahl oder Titan gefertigt. Die metallische Trägerplatte 30 weist eine Stärke von beispielsweise 5 mm auf. Die Trägerplatte 30 weist vier spiralförmige Federlager 31, 32, 32, 33, 34 auf, die insbesondere mittels eines Lasers freigeschnitten sind, und die zueinander ebenfalls die zweizählige Rotationssymmetrie bezüglich der Symmetrieachse durch den Punkt C2 aufweisen. Mit hier nicht dargestellten Lagerbolzen, die im Zentrum der Federlager fixiert sind, ist Die Trägerplatte 30 an einer Gehäuseplatte 40 eines Messaufnehmergehäuses verankert.

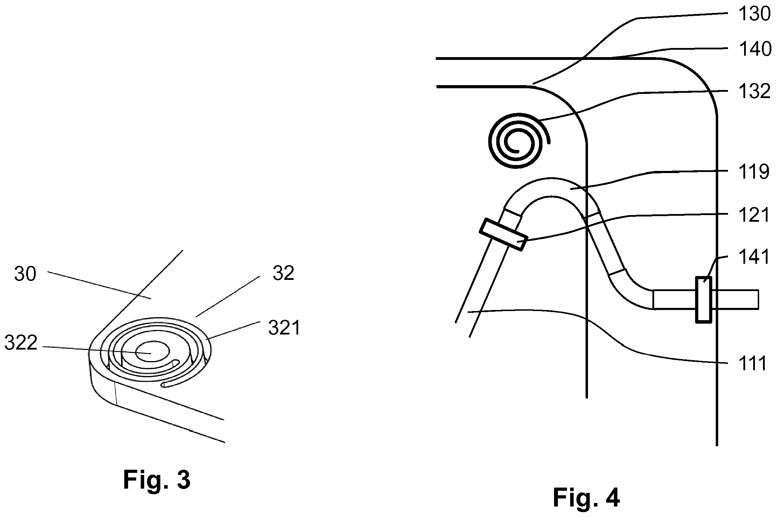

Ein Federlager 32 ist detaillierter in Fig. 3 dargestellt. Die effektive Steifigkeit des Federlagers 32 ergibt sich aus der Länge des spiralförmigen Einschnitts 321 sowie seiner Breite im Verhältnis zur Breite des verbleibenden Materials der Trägerplatte 30. Im Zentrum weist das Federlager 32 eine Bohrung 322 zur Aufnahme eines Lagerbolzens auf.

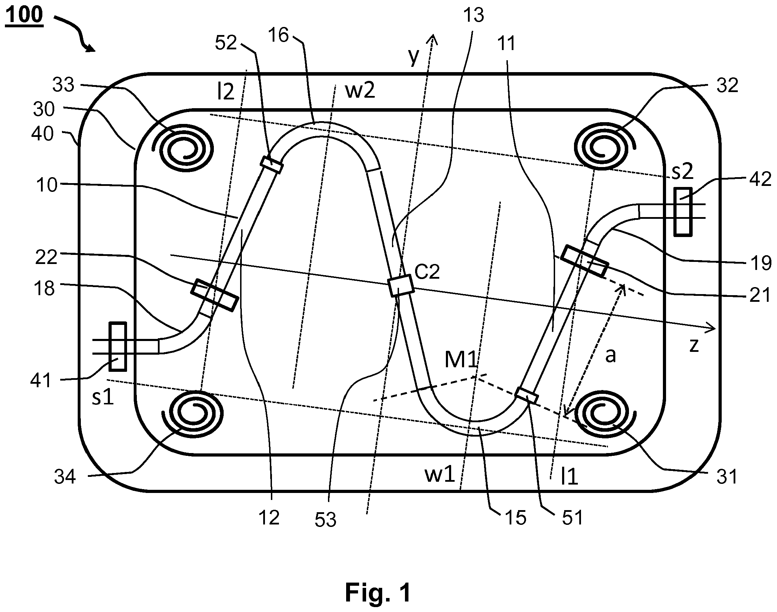

Durch die Federlager 31, 32, 33, 34 weist die Trägerplatte 30 drei Translationsschwingungsfreiheitsgrade und drei Rotationsschwingungsfreiheitsgrade auf, deren Eigenfrequenzen mindestens 70 Hz betragen, um Resonanzschwingungen mit häufig in Prozessanlagen vorkommenden Vibrationen von bis zu 50 Hz zu vermeiden. Um die durch die Federlager 31, 32, 33, 34 erreichte weiche Aufhängung der Trägerplatte nicht zu beeinträchtigen, ist die Messrohrleitung über einen hinreichend weichen Leitungseinlaufabschnitt 18 und einen hinreichend weichen Leitungsauslaufabschnitt 19 an eine Rohrleitung anschließbar. Das Gehäuse weist einen erstes und zweites Gehäuselager 41, 42 auf, die fest mit der Gehäuseplatte 40 verbunden sind, und an denen der Leitungseinlaufabschnitt 18 und der Leitungsauslaufabschnitt 19 fixiert sind, um eine Übertragung von Schwingungen der Rohrleitung auf die Messrohrleitung über den Leitungseinlaufabschnitt 18 und den Leitungsauslaufabschnitt 19 zu unterdrücken. Die Translations- und Rotationsschwingungsfreiheitsgrade der Trägerplatte 20 haben jeweils Eigenfrequenzen f, die proportional sind zur Wurzel aus einem Quotienten aus einer Richtgröße kᵢ und einem Trägheitsterm mᵢ, also fᵢ α (kᵢ/mᵢ)^{1/2}. Der Leitungseinlaufabschnitt 18 und der Leitungsauslaufabschnitt tragen in Summe nicht mehr als 10% zur jeweiligen Richtgröße kᵢ bei. In Fig.1 sind der der Leitungseinlaufabschnitt 18 und der Leitungsauslaufabschnitt 19 im Wesentlichen schematisch dargestellt. Fig. 4 zeigt eine Gestaltung eines Leitungsauslaufabschnitts 119, bei dem durch zusätzliche Rohrlänge und Bögen die Steifigkeit und damit der Beitrag zu den jeweiligen Richtgrößen reduziert ist. Der Leitungseinlaufabschnitt ist entsprechend symmetrisch dazu gestaltet.

Wie weiter in Fig. 1 dargestellt, weist der Messaufnehmer 100 zum Erfassen der Schwingungen der Messrohrleitung einen ersten elektrodynamischen Schwingungssensor 51 und einen zweiten elektrodynamischen Schwingungssensor 52 auf. Die beiden Schwingungssensoren 51, 52 sind hier jeweils auf einem der beiden geraden äußeren Abschnitte 11, 12 nicht mehr als einen Krümmungsradius der gebogenen Abschnitte 15, 16von dem angrenzenden gebogenen Abschnitt angeordnet. Zum Anregen von Biegeschwingungen weist der Messaufnehmer einen elektrodynamischen Erreger 53 auf, der im Zentrum C2 der zweizähligen Rotationssymmetrie angeordnet ist, und in Richtung der Symmetrieachse wirkt.

Das Zentrum C2 ist Ursprung eines Koordinatensystems zur Beschreibung weiterer Gesichtspunkte der Erfindung. Die Messrohrleitung liegt in einer x-z-Ebene, wobei die y-Achse parallel zu Winkelhalbierenden w1, w2 verläuft, die jeweils zwischen einer Rohrachse der geraden äußeren Abschnitte 11, 12 und der Rohrachse des zentralen geraden Abschnitts 13 verlaufen. Die z-Achse verläuft senkrecht zur y-Achse in der Rohrleitungsebene und definiert eine Längsachse des Messaufnehmers 100. Wenn diese Längsachse senkrecht angeordnet ist, ist der Messaufnehmer optimal entleerbar. Die Neigung der geraden Abschnitte ist dann gleich dem halben Winkel zwischen zwischen einer Rohrachse der geraden äußeren Abschnitte 11, 12 und der Rohrachse des zentralen geraden Abschnitts 13. Beim bevorzugten Ausführungsbeispiel der Erfindung beträgt diese Neigung 7°.

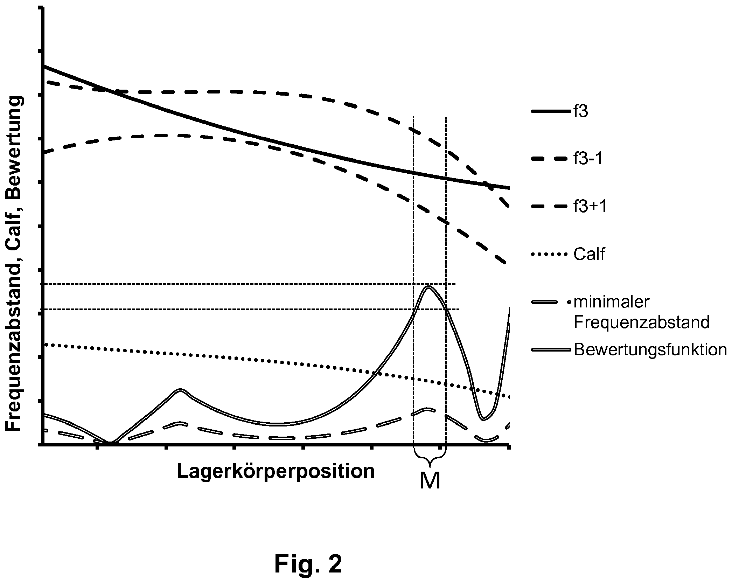

Zur Positionierung der Lagerkörper wird nun auf Fig. 2 verwiesen, welche eine Bewertungsfunktion und deren Komponenten darstellt. Zum Aufstellen der Bewertungsfunktion werden zunächst die Eigenfrequenzen von Schwingungsmoden der Messrohrleitung für verschiedene Lagerkörperpositionen mittels numerischer Simulation ermittelt. Das Ergebnis ist hier für den Biegeschwingungsnutzmode F3 und die hinsichtlich der Eigenfrequenzen benachbarten Biegeschwingungsmoden F3-1 und F3+1 dargestellt. Weiterhin wird ein Kalibrirfaktor Calf := (dm/dt)/dϕ für die verschiedene Lagerkörperpositionen mittels numerischer Simulation ermittelt, welcher den Zusammenhang zwischen einer Massedurchflussrate und einer durchflussabhängigen Phasendifferenz zwischen den Sensorsignalen der Schwingungssensoren beschreibt. Die Bewertungsfunktion wird dann als Quotient aus dem minimalen Frequenzabstand zwischen der Biegeschwingungsnutzmode zu einer benachbarten Schwingungsmode und dem Kalibrierfaktor Calf berechnet. Eine Optimalposition der Lagerkörper, bei der die Bewertungsfunktion ein Maximum aufweist, ist dient zur Orientierung für die tatsächliche Positionierung des Lagerkörpers. Es kann von der Optimalposition abgewichen werden, wenn dadurch der Wert der Bewertungsfunktion um nicht mehr als 2% unterschritten wird. Im dargestellten Ausführungsbeispiel ist die Position der Lagerkörper 21, 22 mittels der Bewertungsfunktion so festgelegt, dass die z-Achse der Messrohrleitung die äußeren geraden Abschnitte 11, 12 der Messrohrleitung beabstandet zu den Lagerkörpern 21, 22 schneidet. Im Ergebnis wurde ein störunempfindlicher Messaufnehmer mit einer kompakt geführten Messrohrleitung realisiert.

## Patentansprüche

1. Vibronischer Messaufnehmer (100) zum Messen des Massendurchflusses eines strömungsfähigen Mediums, umfassend:
einen Leitungseinlaufabschnitt (18);
eine schwingfähige Messrohrleitung (10) zu Führen des Mediums, wobei die Messrohrleitung in ihrer Ruhelage in einer Rohrleitungsebene gebogen ist;
einen Leitungsauslaufabschnitt (19);
mindestens einen Schwingungserreger (53) zum Anregen von Biegeschwingungen der Messrohrleitung (10) in einer Biegeschwingungsnutzmode;
mindestens zwei Schwingungssensoren zum Erfassen von Schwingungen der Messrohrleitung;
wobei ein Kalibrierfaktor (Calf) in erster Näherung eine Proportionalität zwischen einem Massedurchfluss durch die Messrohrleitung und einer Phasendifferenz zwischen Schwingungen der im Biegeschwingungsnutzmode schwingenden Messrohrleitung am Ort der beiden Schwingungssensoren beschreibt,
ein Tragsystem mit einer Trägerplatte (30), mindestens einem einlaufseitigen Lagerkörper (21) und mindestens einem auslaufseitigen Lagerkörper (22); und
ein Messaufnehmergehäuse;
wobei das Tragsystem Tragsystemschwingungsmoden aufweist die elastische Verformungen der Trägerplatte (30) umfassen;
wobei die Messrohrleitung (10) mittels des einlaufseitigen Lagerkörpers (21) und mittels des auslaufseitigen Lagerkörpers (22) mit der Trägerplatte (30) fest verbunden und durch die Lagerkörper begrenzt ist,
wobei die Messrohrleitung (10) einlaufseitig an den Leitungseinlaufabschnitt (18) und auslaufseitig an den Leitungsauslaufabschnitt (19) anschließt und über letztere an eine Rohrleitung anschließbar ist,
wobei der Leitungseinlaufabschnitt (18) und der Leitungsauslaufabschnitt (19) jeweils fest mit dem Messaufnehmergehäuse (40) verbunden sind;
wobei die Trägerplatte (30) eine Anzahl von insbesondere spiralförmigen Federlagern (31, 32, 33, 34) aufweist,
wobei die Trägerplatte über das oder die Federlager gegenüber dem Messaufnehmergehäuse federnd gelagert ist, so dass sie drei Translationsschwingungsfreiheitsgrade und drei Rotationsschwingungsfreiheitsgrade aufweist,
wobei die Eigenfrequenzen von Schwingungen der Trägerplatte gegenüber dem Messaufnehmergehäuse aufgrund der Translationsschwingungsfreiheitsgrade und der Rotationsschwingungsfreiheitsgrade geringer sind als eine Nutzmodeeigenfrequenz des Biegeschwingungsnutzmodes,
wobei die Nutzmodeeigenfrequenz geringer ist als die Eigenfrequenzen der Tragsystemschwingungsmoden,
wobei die wobei die Messrohrleitung im Wesentlichen eine zweizählige Rotationssymmetrie aufweist bezüglich einer Achse die senkrecht zur Rohrleitungsebene verläuft,
**dadurch gekennzeichnet, dass**
ein Federlager jeweils durch mindestens einen Schnitt in der Trägerplatte freigelegt ist,
die Lagerkörper (21, 22) so positioniert sind, dass die Nutzmodeeigenfrequenz einen Frequenzabstand zur nächsten Eigenfrequenz einer anderen Schwingungsmode der Messrohrleitung aufweist, der einen Frequenzabstandsgrenzwert nicht unterschreitet, wobei der Frequenzabstandsgrenzwert mindestens 4% beträgt, und
eine Bewertungsfunktion die, proportional zum Frequenzabstand und umgekehrt proportional zur Nutzmodeeigenfrequenz und zum Kalibrierfaktors (Calf) ist, ein lokales oder absolutes Maximum aufweist, wobei die Lagerkörper so positioniert sind, dass die Bewertungsfunktion den Wert des Maximums um nicht mehr als 4% unterschreitet.

2. Vibronischer Messaufnehmer nach Anspruch 1, wobei der Nutzmode, eine F3-Biegeschwingungsmode ist.

3. Vibronischer Messaufnehmer nach einem der vorhergehenden Ansprüche, wobei die Eigenfrequenzen von Schwingungen der Trägerplatte gegenüber dem Messaufnehmergehäuse aufgrund der Translationsschwingungsfreiheitsgrade und der Rotationsschwingungsfreiheitsgrade höchstens die Hälfte der Nutzmodeeigenfrequenz des Biegeschwingungsnutzmodes beträgt, und wobei die Tragsystem-Eigenfrequenz mindestens das Doppelte die Nutzmodeeigenfrequenz beträgt.

4. Vibronischer Messaufnehmer nach Anspruch 1, wobei die Anzahl der Federlager 1, 2, 3, oder 4 ist.

5. Vibronischer Messaufnehmer nach einem der vorhergehenden Ansprüche, wobei die Messrohrleitung einen S-förmigen Verlauf aufweist, wobei in der Rohrleitungsebene eine Längsrichtung (z) existiert, zu welcher die Rohrleitungsachse an keinem Punkt einen Winkel von mehr als 85°, insbesondere nicht mehr als 83° aufweist.

6. Vibronischer Messaufnehmer nach Anspruch 5, wobei die Messrohrleitung (10) zwischen den beiden Lagerkörpern (21, 22) zwei äußere gerade Abschnitte (11, 12) und einen zentralen geraden Abschnitt (13) aufweist, die durch zwei kreisbogenförmige Abschnitte (15, 16) verbunden sind, wobei die beiden Lagerkörper (21, 22) jeweils an den äußeren geraden Abschnitten angeordnet sind.

7. Vibronischer Messaufnehmer nach einem der vorhergehenden Ansprüche, wobei jeweils eine Winkelhalbierend (w1, w2) zwischen Rohrmittelachsen des zentralen geraden Abschnitts (13) und eines der äußeren geraden Abschnitte (11, 12) verläuft, wobei die Schwingungssensoren jeweils zwischen einem Schnittpunkt einer der Winkelhalbierenden mit der Messohrleitung und einem Punkt auf dem äußeren geraden Abschnitt der Messrohrleitung, der einen Krümmungsradius des kreisförmigen Abschnitts vom Übergang des kreisförmigen Abschnitts zum äußeren geraden Abschnitt entfernt ist, an der Messrohrleitung montiert sind.

8. Vibronischer Messaufnehmer nach einem der vorhergehenden Ansprüche, wobei der Leitungseinlaufabschnitt und der Leitungsauslaufabschnitt, bezüglich der Translationsschwingungsfreiheitsgrade und der Rotationsschwingungsfreiheitsgrade der Trägerplatte gegenüber dem Messaufnehmergehäuse ergänzend zu der Feder bzw. Federn zu einer jeweils freiheitsgradspezifischen Richtgröße beitragen, wobei ein Beitrag des Leitungseinlaufabschnitts von einem entsprechenden Beitrag des Leitungsauslaufabschnitts jeweils nicht mehr als 10%, und insbesondere nicht mehr 5% des jeweils kleineren Beitrags abweicht.

9. Vibronischer Messaufnehmer nach Anspruch 8, wobei der gemeinsame Beitrag des Leitungseinlaufabschnitts und des Leitungsauslaufabschnitts zu den freiheitsgradspezifischen Richtgrößen nicht mehr als 40%, insbesondere nicht mehr als 20% und bevorzugt nicht mehr als 10% beträgt.

10. Vibronischer Messaufnehmer nach einem der vorhergehenden Ansprüche, wobei der Leitungseinlaufabschnitt und der Leitungsauslaufabschnitt im Wesentlichen den gleichen Rohrquerschnitt aufweisen wie die Messrohrleitung, insbesondere das gleiche Rohrmaterial wie die Messrohrleitung, und bevorzugt einstückig mit der Messrohrleitung gefertigt sind.

11. Vibronischer Messaufnehmer nach einem der vorhergehenden Ansprüche wobei die Eigenfrequenzen der Translationsschwingungsfreiheitsgrade und Rotationsschwingungsfreiheitsgrade der Trägerplatte nicht weniger als 70 Hz insbesondere nicht weniger als 100 Hz und/oder nicht mehr als 400 Hz betragen.

12. Vibronischer Messaufnehmer nach Anspruch 6 oder einem davon abhängigen Anspruch, wobei jeweils eine Winkelhalbierende (w1, w2) zwischen einer Rohrmittelachse des zentralen geraden Abschnitts (13) und einer Rohrmittelachse eines der äußeren geraden Abschnitte (11, 12) verläuft, wobei ein Koordinatensystem mit einer z-Achse in der Rohrleitungsebene gegeben ist, die senkrecht zu den Winkelhalbierenden (w1, w2) verläuft, wobei die Achse der zweizähligen Rotationssymmetrie die x-Achse bildet, wobei eine durch die x-Achse und die z-Achse aufgespannte y-z-Ebene, die äußeren geraden Abschnitte beabstandet zu den Lagerkörpern schneidet.

13. Vibronischer Messaufnehmer nach einem der vorhergehenden Ansprüche, wobei der Schwingungserreger im Zentrum der zweizähligen Rotationssymmetrie angeordnet ist, und wobei der Schwingungserreger dazu eingerichtet ist Biegeschwingungen senkrecht zur Rohrleitungsebene anzuregen.

14. Vibronischer Messaufnehmer nach Anspruch 6, oder einem davon abhängigen Anspruch, wobei, jeweils eine Winkelhalbierende (w1, w2) zwischen einer Rohrmittelachse des zentralen geraden Abschnitts (13) und einer Rohrmittelachse eines der äußeren geraden Abschnitte (11, 12) verläuft, wobei ein Koordinatensystem mit einer z-Achse in der Rohrleitungsebene gegeben ist, die senkrecht zu den Winkelhalbierenden (w1, w2) verläuft, wobei Achse der zweizähligen Rotationssymmetrie die x-Achse bildet, wobei die y-Achse die parallel zu den Winkelhalbierenden durch den Schnittpunkt von x-Achse und z-Achse verläuft, wobei eine charakteristische Basisfläche der Messrohrleitung durch ein Rechteck definiert ist, dessen Seiten einerseits in z-Richtung durch jeweils einen Schnittpunkt einer der Winkelhalbierenden mit der Rohrachse eines gebogenen Abschnitts und andererseits in y-Richtung durch jeweils einen Schnittpunkt eines der Lagerkörper mit der Rohrachse der Messrohrleitung verlaufen, wobei das Verhältnis der Rechteckfläche zum Innendurchmesser der Messrohrleitung nicht mehr als 8000, insbesondere nicht mehr als 6000, und bevorzugt nicht mehr als 5000 beträgt.

15. Vibronischer Messaufnehmer nach einem der vorhergehenden Ansprüche, wobei der Innendurchmesser der Messrohrleitung nicht mehr als 5 mm beträgt.

## Claims

1. Vibronic sensor (100) designed to measure the mass flow of a medium capable of flowing, said sensor comprising:
a pipe inlet section (18);
a measuring pipe (10) which is able to vibrate and designed to conduct the medium, wherein the measuring pipe is curved in its rest position in a pipe plane;
a pipe outlet section (19);
at least one vibration exciter (53) designed to excite flexural vibrations of the measuring pipe (10) in a flexural vibration useful mode;
at least two vibration sensors designed to capture vibrations of the measuring pipe;
wherein, in a first approximation, a calibration factor (Calf) describes a proportionality between a mass flow through the measuring pipe and a phase difference between vibrations of the measuring pipe vibrating in the flexural vibration useful mode at the place of the two vibration sensors,
a support system with a support plate (30), at least a bearing body (21) on the inlet side and at least a bearing body (22) on the outlet side; and
a sensor housing;
wherein the support system has support system vibration modes that comprise elastic deformations of the support plate (30);
wherein the measuring pipe (10) is permanently connected to the support plate (30) by means of the bearing body (21) on the inlet side and by means of the bearing body (22) on the outlet side and is limited by the bearing bodies,
wherein the measuring pipe (10) is attached, on the inlet side, to the pipe inlet section (18) and, on the outlet side, to the pipe outlet section (19) and can be connected to a pipe via the latter,
wherein the pipe inlet section (18) and the pipe outlet section (19) are both permanently connected to the sensor housing (40);
wherein the support plate (30) has a number of particularly spiral-shaped spring supports (31, 32, 33, 34),
wherein the support plate is spring-mounted in relation to the sensor housing by means of the spring support(s), in such a way that it has three translational vibrational degrees of freedom and three rotational vibrational degrees of freedom,
wherein, due to the translational vibrational degrees of freedom and the rotational vibrational degrees of freedom, the natural frequencies of vibrations of the support plate in relation to the sensor housing are less than a useful mode natural frequency of the flexural vibration useful mode,
wherein the useful mode natural frequency is less than the natural frequencies of the support system vibration modes,
wherein the measuring pipe essentially has two-fold rotational symmetry in relation to an axis that is perpendicular to the pipe plane,
**characterized in that**
a spring support is exposed, in each case, by at least one cut in the support plate,
the bearing bodies (21, 22) are positioned in such a way that the useful mode natural frequency has a frequency distance in relation to the next natural frequency of another vibration mode of the measuring pipe, wherein said distance does not drop below a frequency distance limit value, wherein the frequency distance limit value is at least 4%, and
an evaluation function, which is proportional to the frequency distance and inversely proportional to the useful mode natural frequency and to the calibration factor (Calf), has a local or absolute maximum, wherein the bearing bodies are positioned in such a way that the evaluation function does not drop below the value of the maximum by more than 4%.

2. Vibronic sensor as claimed in Claim 1, wherein the useful mode is an F3 flexural vibration mode.

3. Vibronic sensor as claimed in one of the previous claims, wherein the natural frequencies of vibrations of the support plate in relation to the sensor housing due to the translational vibrational degrees of freedom and the rotational vibrational degrees of freedom are, at maximum, equal to half of the useful mode natural frequency of the flexural vibration useful mode, and wherein the natural frequency of the support system is at least double the useful mode natural frequency.

4. Vibronic sensor as claimed in Claim 1, wherein the number of spring supports is 1, 2, 3 or 4.

5. Vibronic sensor as claimed in one of the previous claims, wherein the measuring pipe has an S-shaped course, wherein a longitudinal direction (z) exists in the pipe plane, wherein the pipe axis does not have an angle greater than 85°, particularly not greater than 83°, at any point in relation to said direction.

6. Vibronic sensor as claimed in Claim 5, wherein, between the two bearing bodies (21, 22), the measuring pipe (10) has two outer straight sections (11, 12) and a central straight section (13), which are connected by two arc-shaped sections (15, 16), wherein the two bearing bodies (21, 22) are arranged, respectively, on the outer straight sections.

7. Vibronic sensor as claimed in one of the previous claims, wherein an angle bisector (w1, w2) extends between the pipe central axes of the central straight section (13) and one of the outer straight sections (11, 12), wherein the vibration sensors are mounted, respectively, on the measuring pipe between a point of intersection of one of the angle bisectors with the measuring pipe and a point on the outer straight section of the measuring pipe, which is at a distance of one radius of curvature of the circular section from the transition of the circular section to the outer straight section.

8. Vibronic sensor as claimed in one of the previous claims, wherein, with regard to the translational vibrational degrees of freedom and the rotational vibrational degrees of freedom of the support plate in relation to the sensor housing, the pipe inlet section and the pipe outlet section contribute - in addition to the spring or springs - to a reference variable specific to the degree of freedom, wherein a contribution of the pipe inlet section does not deviate from a corresponding contribution of the pipe outlet section by more than 10%, and particularly by not more than 5% of the smaller contribution in each case.

9. Vibronic sensor as claimed in Claim 8, wherein the joint contribution of the pipe inlet section and the pipe outlet section to the reference variables specific to the degree of freedom is not greater than 40%, particularly not greater than 20% and preferably not greater than 10%.

10. Vibronic sensor as claimed in one of the previous claims, wherein the pipe inlet section and the pipe outlet section essentially have the same cross-section as the measuring pipe, particularly the same pipe material as the measuring pipe, and preferably made in one piece with the measuring pipe.

11. Vibronic sensor as claimed in one of the previous claims, wherein the natural frequencies of the translational and rotational vibrational degrees of freedom of the support plate are not less than 70 Hz, particularly not less than 100 Hz and/or not greater than 400 Hz.

12. Vibronic sensor as claimed in Claim 6 or a dependent claim, wherein an angle bisector (w1, w2) extends, in each case, between a pipe central axis of the central straight section (13) and a pipe central axis of one of the outer straight sections (11, 12), wherein a system of coordinates is defined with a z-axis in the pipe plane, wherein said axis is perpendicular to the angle bisectors (w1, w2), wherein the axis of the two-fold rotational symmetry forms the x-axis, wherein a y-z plane defined by the x-axis and the z-axis intersects the outer straight sections at a distance from the bearing bodies.

13. Vibronic sensor as claimed in one of the previous claims,
wherein the vibration exciter is arranged at the center of the two-fold rotational symmetry, and
wherein the vibration exciter is designed to generate flexural vibrations perpendicular to the pipe plane.

14. Vibronic sensor as claimed in Claim 6 or a dependent claim,
wherein, in each case, an angle bisector (w1, w2) extends between a pipe central axis of the central straight section (13) and a pipe central axis of one of the outer straight sections (11, 12), wherein a system of coordinates is defined with a z-axis in the pipe plane, which is perpendicular to the angle bisectors (w1, w2), wherein the axis of the two-fold rotational symmetry forms the x-axis, wherein the y-axis is the axis parallel to the angle bisectors passing through the point of intersection of the x-axis and the z-axis, wherein a characteristic basic surface of the measuring pipe is defined by a rectangle whose sides run in the z-direction through a point of intersection of one of the angle bisectors with the pipe axis of a curved section and in the y-direction through a point of intersection of one of the bearing bodies with the axis of the measuring pipe, wherein the ratio of the surface of the rectangle to the inner diameter of the measuring tube is not more than 8000, particularly not more than 6000, and preferably not more than 5000.

15. Vibronic sensor as claimed in one of the previous claims, wherein the inner diameter of the measuring pipe is not greater than 5 mm.

## Revendications

1. Capteur vibronique (100) destiné à la mesure du débit massique d'un produit apte à s'écouler, lequel capteur comprend :
une section d'entrée de conduite (18) ;
une conduite de mesure (10) apte à vibrer destinée à guider le produit, la conduite de mesure étant courbée dans sa position de repos dans un plan de la conduite ;
une section de sortie de conduite (19) ;
au moins un excitateur de vibrations (53) destiné à générer des vibrations de flexion de la conduite de mesure (10) dans un mode utile de vibrations de flexion ;
au moins deux capteurs de vibrations destinés à détecter les vibrations de la conduite de mesure ;
un facteur d'étalonnage (Calf) décrivant en première approximation une proportionnalité entre un débit massique à travers la conduite de mesure et une différence de phase entre des vibrations de la conduite de mesure vibrant dans le mode utile de vibration de flexion à l'emplacement des deux capteurs de vibrations,
un système de support comprenant une plaque de support (30), au moins un corps de palier côté entrée (21) et au moins un corps de palier côté sortie (22) ; et
un boîtier de capteur ;
le système de support présentant des modes de vibration du système de support qui comprennent des déformations élastiques de la plaque de support (30) ;
la conduite de mesure (10) étant reliée de manière fixe à la plaque de support (30) au moyen du corps de palier côté entrée (21) et au moyen du corps de palier côté sortie (22) et étant limitée par les corps de palier,
la conduite de mesure (10) aboutissant côté entrée à la section d'entrée de conduite (18) et côté sortie à la section de sortie de conduite (19) et pouvant être raccordée par cette dernière à une conduite,
la section d'entrée de conduite (18) et la section de sortie de conduite (19) étant respectivement reliées de manière fixe au boîtier de capteur (40) ;
la plaque de support (30) présentant un certain nombre de paliers à ressort (31, 32, 33, 34), notamment en forme de spirale,
la plaque de support étant montée élastiquement par rapport au boîtier de capteur par l'intermédiaire du ou des paliers à ressort, de sorte qu'elle présente trois degrés de liberté de vibration en translation et trois degrés de liberté de vibration en rotation,
les fréquences propres des vibrations de la plaque support par rapport au boîtier de capteur étant inférieures, en raison des degrés de liberté de vibration en translation et des degrés de liberté de vibration en rotation, à une fréquence propre du mode utile de vibration en flexion,
la fréquence propre de mode utile étant inférieure aux fréquences propres des modes de vibration du système de support,
la conduite de mesure présentant pour l'essentiel une symétrie de rotation d'ordre 2 par rapport à un axe perpendiculaire au plan de la conduite,
**caractérisé en ce quelqu'**
un palier à ressort est respectivement exposé par au moins une découpe dans la plaque de support,
les corps de palier (21, 22) sont positionnés de telle sorte que la fréquence propre du mode utile présente un écart de fréquence par rapport à la fréquence propre suivante d'un autre mode de vibration de la conduite de mesure, lequel écart n'est pas inférieur à une valeur limite d'écart de fréquence, la valeur limite d'écart de fréquence étant d'au moins 4 %, et
une fonction d'évaluation qui est proportionnelle à l'écart de fréquence et inversement proportionnelle à la fréquence propre du mode utile et au facteur d'étalonnage (Calf), présente un maximum local ou absolu, les corps de palier étant positionnés de telle sorte que la fonction d'évaluation ne soit pas inférieure à la valeur du maximum de plus de 4 %.

2. Capteur vibronique selon la revendication 1, pour lequel le mode utile est un mode de vibration de flexion F3.

3. Capteur vibronique selon l'une des revendications précédentes, pour lequel les fréquences propres des vibrations de la plaque de support par rapport au boîtier de capteur dues aux degrés de liberté de vibration en translation et aux degrés de liberté de vibration en rotation sont au plus égales à la moitié de la fréquence propre du mode utile des vibrations de flexion, et dans lequel la fréquence propre du système de support est au moins égale au double de la fréquence propre du mode utile.

4. Capteur vibronique selon la revendication 1, pour lequel le nombre de paliers à ressort est de 1, 2, 3 ou 4.

5. Capteur vibronique selon l'une des revendications précédentes, pour lequel la conduite de mesure présente un tracé en forme de S, une direction longitudinale (z) existant dans le plan de la conduite, direction par rapport à laquelle l'axe de la conduite ne présente en aucun point un angle supérieur à 85°, notamment pas supérieur à 83°.

6. Capteur vibronique selon la revendication 5, pour lequel la conduite de mesure (10) présente, entre les deux corps de palier (21, 22) deux sections droites extérieures (11, 12) et une section droite centrale (13), qui sont reliées par deux sections en arc de cercle (15, 16), les deux corps de palier (21, 22) étant disposés respectivement sur les sections droites extérieures.

7. Capteur vibronique selon l'une des revendications précédentes, pour lequel une bissectrice (w1, w2) s'étend respectivement entre des axes centraux de conduite de la section droite centrale (13) et l'une des sections droites extérieures (11, 12), les capteurs de vibrations étant montés sur la conduite de mesure respectivement entre un point d'intersection de l'une des bissectrices avec la conduite de mesure et un point sur la section droite extérieure de la conduite de mesure, lequel point est éloigné d'un rayon de courbure de la section circulaire de la transition de la section circulaire à la section droite extérieure.

8. Capteur vibronique selon l'une des revendications précédentes, pour lequel la section d'entrée de conduite et la section de sortie de conduite contribuent, en ce qui concerne les degrés de liberté de vibration en translation et les degrés de liberté de vibration en rotation de la plaque de support par rapport au boîtier de capteur, en complément du ou des ressorts, à une grandeur indicative spécifique au degré de liberté, une contribution de la section d'entrée de conduite ne s'écartant pas de plus de 10 %, et notamment pas de plus de 5 % de la plus petite contribution respective, par rapport à une contribution correspondante de la section de sortie de conduite.

9. Capteur vibronique selon la revendication 8, pour lequel la contribution commune de la section d'entrée de conduite et de la section de sortie de conduite aux valeurs indicatives spécifiques aux degrés de liberté n'est pas supérieure à 40 %, notamment pas supérieure à 20 % et de préférence pas supérieure à 10 %.

10. Capteur vibronique selon l'une des revendications précédentes, pour lequel la section d'entrée de conduite et la section de sortie de conduite présentent essentiellement la même section que la conduite de mesure, notamment le même matériau que la conduite de mesure, et étant de préférence fabriquées d'une seule pièce avec la conduite de mesure.

11. Capteur vibronique selon l'une des revendications précédentes, pour lequel les fréquences propres des degrés de liberté de vibrations en translation et des degrés de liberté de vibrations en rotation de la plaque de support ne sont pas inférieures à 70 Hz, notamment pas inférieures à 100 Hz et/ou pas supérieures à 400 Hz.

12. Capteur vibronique selon la revendication 6 ou une revendication dépendante de celle-ci, pour lequel une bissectrice (w1, w2) s'étend entre un axe central de conduite de la section droite centrale (13) et un axe central de conduite d'une des sections droites extérieures (11, 12), un système de coordonnées étant défini avec un axe z dans le plan de la conduite, lequel axe est perpendiculaire aux bissectrices (w1, w2), l'axe de la symétrie de rotation d'ordre 2 formant l'axe x, un plan y-z défini par l'axe x et l'axe z coupant les sections droites extérieures à une distance des corps de palier.

13. Capteur vibronique selon l'une des revendications précédentes,
pour lequel l'excitateur de vibrations est disposé au centre de la symétrie de rotation d'ordre 2, et
pour lequel l'excitateur de vibrations est conçu pour générer des vibrations de flexion perpendiculaires au plan de la conduite.

14. Capteur vibronique selon la revendication 6 ou une revendication dépendante de celle-ci,
pour lequel une bissectrice (w1, w2) s'étend entre un axe central de conduite de la section droite centrale (13) et un axe central de conduite de l'une des sections droites extérieures (11, 12), un système de coordonnées étant défini avec un axe z dans le plan de la conduite, lequel axe est perpendiculaire aux bissectrices (w1, w2), l'axe de la symétrie de rotation d'ordre 2 étant l'axe x, l'axe y étant l'axe parallèle aux bissectrices passant par le point d'intersection de l'axe x et de l'axe z, une surface de base caractéristique de la conduite de mesure étant définie par un rectangle dont les côtés passent d'une part dans la direction z par respectivement un point d'intersection de l'une des bissectrices avec l'axe de la conduite d'un tronçon coudé et d'autre part dans la direction y par respectivement un point d'intersection de l'un des corps de palier avec l'axe de la conduite de mesure, le rapport de la surface du rectangle au diamètre intérieur de la conduite de mesure n'étant pas supérieur à 8 000, notamment pas supérieur à 6 000, et de préférence pas supérieur à 5 000.

15. Capteur vibronique selon l'une des revendications précédentes, pour lequel le diamètre intérieur de la conduite de mesure n'est pas supérieur à 5 mm.
